# EUROPÄISCHE PATENTANMELDUNG

(11) **EP 2 127 854 A2**
(43) Veröffentlichungstag der Anmeldung: **02.12.2009**
(21) Anmeldenummer: 09004458.7
(22) Anmeldetag: 27.03.2009
(51) Int. Cl.: B29C 69/00, B29C 69/02, B29C 53/84, B60J 10/00

(54) **Dichtungsträger für Kraftfahrzeuge und Verfahren zu dessen Herstellung**

(30) Priorität: 26.05.2008 DE 102008025146
(71) Anmelder: Webasto AG, 82131 Stockdorf (DE)
(72) Erfinder: Zunzer, Andreas Josef, 80687 München (DE)
(74) Vertreter: Bosch, Matthias

(57) **Zusammenfassung**

Die Aufgabe einen Dichtungsträger sowie Herstellungsverfahren für Dichtungsträger bereit zu stellen mit Hilfe dessen bzw. derer eine individuelle Formgebung auch bei geringeren Stückzahlen wirtschaftlich vertretbar ist und ein aufwendiges Nachbearbeiten vermieden werden kann wird durch das erfindungsgemäße Herstellungsverfahren für Dichtungsträger für Kraftfahrzeuge gelöst, das unter anderem folgende Schritte ausgeführt:
a) Extrudieren eines im wesentlichen geradlinigen Stranges aus einem thermoplastischen Werkstoff;
b) Ablängen des im wesentlichen geradlinigen Stranges auf eine vorbestimmte Länge;
c) Erwärmen des abgelängten im wesentlichen geradlinigen Stranges auf eine Temperatur, die ein einfaches Formen des im wesentlichen geradlinigen Stranges erlaubt;
d) Umformen des verformbaren abgelängten Stranges in einer hitzebeständigen Form;
e) Abkühlen des Dichtungsträgers.

## Beschreibung

Gegenstand der vorliegenden Erfindung sind Herstellungsverfahren für Dichtungsträger für Kraftfahrzeuge sowie Dichtungsträger.

Aus dem Stand der Technik sind Dichtungsträger und Verfahren zur Herstellung von Dichtungsträgern bekannt bei denen die Dichtungsträger aus einem metallenen Werkstoff bestehen oder in einem Spritzgießverfahren hergestellt werden. Bei diesem Verfahren sind aufwendige Werkzeuge zum Spritzgießen erforderlich, so dass sich die Herstellung derartiger Dichtungsträger erst ab einer gewissen Stückzahl wirtschaftlich realisieren lässt.

Da die Dichtungsträger dauerhaft mit der Karosserie, einem Dachbestandteil, einer Tür oder einem Verdecksystem verbunden werden, und ein Dichtungselement paßgenau darin angeordnet werden muß, werden an die Präzision und Toleranz der Dichtungsträger sowie an die thermische Belastbarkeit insbesondere im Dachbereich hohe Ansprüche gestellt.

Aufgrund dieser Erfordernisse werden im Stand der Technik derartige Dichtungsträger entweder durch ein aufwendiges Spritzgießverfahren oder im Rahmen eines Strangpressverfahrens aus Aluminium hergestellt. Dabei sind die stranggepressten Rohprofile üblicherweise 3D-streckgebogen und werden in einem Endbearbeitungsschritt spanend bearbeitet oder in einem speziellen Werkzeug bestanzt, um die erforderliche Präzision zu erzielen.

Aufgrund der zunehmend größeren Anzahl von Kleinserien; insbesondere im Cabrioletbereich hat sich das Verfahren nach dem Stand der Technik als unwirtschaftlich erwiesen, da entweder aufwendige Werkzeugkosten oder eine aufwendige Nachbearbeitung kostenintensiv ist.

Aufgabe der vorliegenden Erfindung ist es daher, Dichtungsträger sowie Herstellungsverfahren für Dichtungsträger bereit zu stellen mit Hilfe dessen bzw. derer eine individuelle Formgebung auch bei geringeren Stückzahlen wirtschaftlich vertretbar ist und ein aufwendiges Nachbearbeiten vermieden werden kann.

Diese technische Aufgabe wird durch die Herstellungsverfahren mit den Merkmalen gemäß Anspruch 1, Anspruch 6 und Anspruch 12 erfüllt. Vorteilhafte Varianten sind in den Unteransprüchen gekennzeichnet.

Bei dem erfindungsgemäßen Herstellungsverfahren für Dichtungsträger für Kraftfahrzeuge werden unter anderem folgende Schritte ausgeführt:
a) Extrudieren eines im wesentlichen geradlinigen Stranges aus einem thermoplastischen Werkstoff;
b) Ablängen des im wesentlichen geradlinigen Stranges auf eine vorbestimmte Länge;
c) Erwärmen des abgelängten im wesentlichen geradlinigen Stranges auf eine Temperatur, die ein einfaches Formen des im wesentlichen geradlinigen Stranges erlaubt;
d) Umformen des verformbaren abgelängten Stranges in einer hitzebeständigen Form;
e) Abkühlen des Dichtungsträgers.

Bei einer weiteren vorteilhaften Variante dieses erfindungsgemäßen Herstellungsverfahrens werden nach erfolgtem Abkühlen des Dichtungsträgers Funktionsflächen, beispielsweise für die Anbringung von Nieten, Schrauben oder anderen Befestigungselementen durch ein spanendes oder stanzendes Bearbeiten des Dichtungsträgers erstellt. Hierzu kann es vorteilhaft sein, eine derartige Feinbearbeitung in einer Werkzeugmaschine vorzunehmen oder auch gegebenenfalls bei kleineren Stückzahlen manuell vorzunehmen.

Bei einer weiteren vorteilhaften Variante des erfindungsgemäßen Herstellungsverfahrens erfolgt die Erwärmung des abgelängten im wesentlichen geradlinigen Stranges durch Mikrowellenbestrahlung. Zum Erwärmen des thermoplastischen Kunststoffes kann es notwendig sein, dass das extrudierte Strangmaterial konditioniert wird, um durch Mikrowellenbestrahlung erwärmt zu werden. Hierzu kann es zweckmäßig sein, das extrudierte Strangmaterial lediglich der Atmosphäre auszusetzen, so daß das in der Luft befindliche Wasser in das extrudierte Strangmaterial eindringen kann. Ebenso kann es zweckmäßig sein, das extrudierte Strangmaterial in einem Wasserbad so zu konditionieren, dass es mittels Mikrowellenbestrahlung erwärmt werden kann.

Bei einer anderen Variante erfolgt die Erwärmung über einen Elektroofen (Heizofen, auch Gas/Öl, etc.) durch den der Dichtungsträger geschickt wird. Bei einer weiteren Variante des erfindungsgemäßen Verfahrens erfolgt die Erwärmung durch Heizspiralen oder Heizkanäle, die in einer Umformeinrichtung angeordnet sind.

Vorteilhafterweise erfolgt die Umformung des verformbaren abgelängten Stranges in einer hitzebeständigen Form, die beispielsweise eine einschalige oder mehrschalige Muldenform ist, in der das Negativ des Dichtungsträgers in seiner endgültigen Form ausgebildet ist.

Bei einer anderen vorteilhaften Variante des erfindungsgemäßen Herstellungsverfahrens wird der extrudierte im wesentlichen geradlinige Strang mit einem abstützenden Füllmedium gefüllt, wobei dies gegebenenfalls auch schon während des Extrudierens erfolgen kann, um Wandbereiche oder Hinterschneidungen des Dichtungsträgers während des erwärmten Zustands gegen ein Kollabieren der Wände oder Hinterschneidungen abzustützen. Ein derartiges Füllmedium kann beispielsweise Silikon oder ein anderer elastomerischer oder thermoplastischer Werkstoff sein.

In einem weiteren erfindungsgemäßen Herstellungsverfahren für Dichtungsträger für Kraftfahrzeuge werden folgende Schritte ausgeführt:
a) Extrudieren eines im wesentlichen geradlinigen Stranges aus einem thermoplastischen Werkstoff;
b) Ablängen des im wesentlichen geradlinigen Stranges auf eine vorbestimmte Länge;
c) Vorbiegen des im wesentlichen geradlinigen Stranges auf eine erste Zwischenform;
d) Erwärmen des abgelängten im wesentlichen geradlinigen Stranges auf eine Temperatur, die ein einfaches Verformen des im wesentlichen geradlinigen Stranges erlaubt;
e) Abkühlen des Dichtungsträgers;
f) Biegen des vorgeformten Stranges auf eine zweite Zwischenform;
g) Erwärmen des abgelängten im wesentlichen geradlinigen Stranges auf eine Temperatur, die ein einfaches Formen des im wesentlichen geradlinigen Stranges erlaubt;
h) Abkühlen des Dichtungsträgers;
i) Durchführen der Schritte f) bis h) bis die gewünschte Endform erreicht ist.

Bei einer vorteilhaften Variante des vorgenannten erfindungsgemäßen Herstellungsverfahrens wird der Dichtungsträger in einem weiteren Verfahrenschritt von dem im wesentlichen geradlinigen Strang unmittelbar auf seine gewünschte Endform gebogen, da bei einigen Dichtungsträgern lediglich eine minimale Krümmung erforderlich ist und diese mit lediglich einem weiteren Verfahrensschritt erreicht werden kann.

Eine derartige minimale Krümmung kann beispielsweise gewünscht sein, wenn der erfindungsgemäße Dichtungsträger in einem Faltdachsystem eingesetzt wird bei der ein Teilbereich des Faltdaches nur eine leichte Krümmung aufweist. Bei Dichtungsträgern, die eine komplexere Formgebung erfordern, kann es hingegen erforderlich sein, dass die gewünschte Endform nur über eine Vielzahl von Zwischenformen erreicht werden kann, um beispielsweise ein ungewünschtes Stauchen oder Quetschen des Dichtungsträgers zu vermeiden.

Wie auch bei der vorgenannten Variante des erfindungsgemäßen Herstellungsverfahrens kann das Erwärmen über die bereits vorgenannten unterschiedlichen Verfahrensmaßnahmen erfolgen.

Bei einer bevorzugten Ausführungsvariante des erfindungsgemäßen Herstellungsverfahrens wird während des Extrudierens des im wesentlichen geradlinigen Stranges aus einem thermoplastischen Werkstoff ein Verstärkungsmittel beigemengt, mit Hilfe dessen der im wesentlichen geradlinige Strang eine höhere Belastbarkeit, beispielsweise Zugfestigkeit, oder Biegefestigkeit erhält, um gegebenenfalls strikten Abmaßanforderungen besser entsprechen zu können. Derartige Verstärkungsmittel können beispielsweise Carbonfasern und/oder Glasfasern sein, es ist ebenso vorstellbar, dass während des Extrudierens eine sogenannte Metallseele vorgesehen ist, die den Dichtungsträger verstärkt.

Bei einer weiteren Ausführungsvariante des erfindungsgemäßen Herstellungsverfahrens für Dichtungsträger für Kraftfahrzeuge werden folgende Schritte ausgeführt:
a) Extrudieren eines im wesentlichen geradlinigen Stranges aus einem thermoplastischen Werkstoff;
b) Ablängen des im wesentlichen geradlinigen Stranges auf eine vorbestimmte Länge;
c) Verformen des im wesentlichen geradlinigen Stranges auf die gewünschte Endform;
d) Aussetzen des vorgeformten Stranges einer energiereichen Strahlung;
e) Aushärten des Dichtungsträgers in der gewünschten Endform.

Zur Aushärtung des vorgeformten Stranges kann dieser beispielsweise einer energiereiche Strahlung aus dem Spektrum des ultravioletten Lichts oder einer anderen energiereichen Strahlung ausgesetzt werden.

Ein wesentlicher Vorteil dieser Ausführungsvariante ist, dass der leicht bewegliche im wesentlichen geradlinige Strang ohne Aufbringen einer physischen Kraft in eine gewünschte Endform gebracht werden kann, in dieser nach der Bestrahlung mit einer energiereichen Strahlung aushärtet und so dann in der gewünschten Endform verbleibt.

Bei einer bevorzugten Ausführungsform der vorliegenden Erfindung werden die erfindungsgemäßen Dichtungsträger über Befestigungsmittel, bspw. Schrauben mit der Fahrzeugkarosserie verbunden. Da die erfindungsgemäßen Dichtungsträger einen anderen Wärmeausdehnungskoeffizienten aufweisen als das jeweilige Gegenstück, ist es vorteilhaft, die Aussparungen als Langlöcher auszubilden. Dies vereinfacht zum einen die Montage, sowie erlaubt zum anderen größere Toleranzen, so daß ein Verspannen des montierten Dichtungsträgers vermieden wird. Ein weiterer Vorteil bei der Vermeidung von Verspannungen ist, dass auch die Geräuschbildung reduziert oder vermieden werden kann.

Bei einer anderen Ausführungsvariante der vorliegenden Erfindung wird bereits während des Herstellens des Dichtungsträgers Metallbuchsen so in den Dichtungsträger eingearbeitet, dass ein Anschrauben der Dichtungsträger wesentlich erleichtert wird. Hierzu werden die Metallbuchsen in die Dichtungsträger eingepresst, wobei dies bereits unmittelbar nach dem Extrudieren in den noch verformbaren Strang erfolgen kann oder auch nach dessen Abkühlung.

## Patentansprüche

1. Herstellungsverfahren für Dichtungsträger für Kraftfahrzeuge, das folgende Schritte aufweist:
a) Extrudieren eines im wesentlichen geradlinigen Stranges aus einem thermoplastischen Werkstoff;
b) Ablängen des im wesentlichen geradlinigen Stranges auf eine vorbestimmte Länge;
c) Erwärmen des abgelängten im wesentlichen geradlinigen Stranges auf eine Temperatur, die ein einfaches Verformen des im wesentlichen geradlinigen Stranges erlaubt;
d) Umformen des verformbaren abgelängten Stranges in einer hitzebeständigen Form;
e) Abkühlen des Dichtungsträgers.

2. Herstellungsverfahren nach Anspruch 1, weiterhin den Schritt aufweisend:
f) Anfertigen von Funktionsflächen durch spanendes Bearbeiten des Dichtungsträgers.

3. Herstellungsverfahren nach einem der vorherigen Ansprüche, wobei der Schritt c) **dadurch gekennzeichnet ist, daß** das Erwärmen mittels Mikrowellenbestrahlung erfolgt.

4. Herstellungsverfahren nach einem der vorherigen Ansprüche, wobei der Schritt d) **dadurch gekennzeichnet ist, daß** das Umformen in einer einschaligen Muldenform erfolgt.

5. Herstellungsverfahren nach einem der Ansprüche 1 bis 3, wobei der Schritt d) **dadurch gekennzeichnet ist, daß** der Dichtungsträger mit einem abstützenden Füllmedium gefüllt ist, welches nach der Umformung entfernt wird.

6. Herstellungsverfahren für Dichtungsträger für Kraftfahrzeuge, das folgende Schritte aufweist:
a) Extrudieren eines im wesentlichen geradlinigen Stranges aus einem thermoplastischen Werkstoff;
b) Ablängen des im wesentlichen geradlinigen Stranges auf eine vorbestimmte Länge;
c) Vorbiegen des im wesentlichen geradlinigen Stranges auf eine erste Zwischenform;
d) Erwärmen des abgelängten im wesentlichen geradlinigen Stranges auf eine Temperatur, die ein einfaches Verformen des im wesentlichen geradlinigen Stranges erlaubt;
e) Abkühlen des Dichtungsträgers.

7. Herstellungsverfahren für Dichtungsträger für Kraftfahrzeuge nach Anspruch 6, **dadurch gekennzeichnet, daß** die folgenden weiteren Schritte enthalten sind:
f) Biegen des vorgeformten Stranges auf eine zweite Zwischenform;
g) Erwärmen des abgelängten im wesentlichen geradlinigen Stranges auf eine Temperatur, die ein einfaches Verformen des im wesentlichen geradlinigen Stranges erlaubt;
h) Abkühlen des Dichtungsträgers;
i) Durchführen der Schritte f) bis h) bis die gewünschte Endform erreicht ist.

8. Herstellungsverfahren für Dichtungsträger nach Anspruch 5, wobei der Schritt d) und g) **dadurch gekennzeichnet ist, daß** das Erwärmen mittels Mikrowellenbestrahlung erfolgt.

9. Herstellungsverfahren nach einem der Ansprüche 5, 6 oder 7, wobei der Schritt c) und f) **dadurch gekennzeichnet ist, daß** das Umformen in einer einschaligen Muldenform oder einer mehrschaligen Form erfolgt.

10. Herstellungsverfahren nach einem der vorherigen Ansprüche, wobei der Schritt a) weiterhin umfasst:
- Beimengung von Verstärkungsmittel zum thermoplastischen Werkstoff.

11. Herstellungsverfahren nach Anspruch 10, wobei die Verstärkungsmittel aus Carbonfasern und/oder Glasfasern bestehen.

12. Herstellungsverfahren für Dichtungsträger für Kraftfahrzeuge, das folgende Schritte aufweist:
a) Extrudieren eines im wesentlichen geradlinigen Stranges aus einem thermoplastischen Werkstoff;
b) Ablängen des im wesentlichen geradlinigen Stranges auf eine vorbestimmte Länge;
c) Verformen des im wesentlichen geradlinigen Stranges auf die gewünschte Endform;
d) Aussetzen des vorgeformten Stranges einer energiereichen Strahlung;
e) Aushärten des Dichtungsträgers in der gewünschten Endform.

13. Herstellungsverfahren für Dichtungsträger für Kraftfahrzeuge nach Anspruch 12, wobei die energiereiche Strahlung eine Ultraviolett Strahlung ist.

14. Dichtungsträger, **dadurch gekennzeichnet, daß** diese nach einem der vorgenannten Herstellungsverfahren gemäß Anspruch 1 bis 13 hergestellt sind.
